# FASCICULE DE BREVET EUROPEEN

(11) **EP 3 167 200 B1**
(45) Date de publication et mention de la délivrance du brevet: **29.08.2018**
(21) Numéro de dépôt: 15733807.0
(22) Date de dépôt: 05.06.2015
(51) Int. Cl.: F16B 21/16

(54) **DISPOSITIF DE CONNEXION DE SECURITE A DECONNEXION AUTOMATIQUE EN CAS DE TRACTION SUPERIEURE A UNE VALEUR LIMITE REGLABLE**
SICHERHEITSVERBINDUNGSVORRICHTUNG MIT AUTOMATISCHER ABSCHALTUNG IM FALLE EINER GRÖSSEREN ZUGKRAFT ALS EIN EINSTELLBARER GRENZWERT
SAFETY CONNECTION DEVICE THAT DISCONNECTS AUTOMATICALLY IN THE EVENT OF TRACTION GREATER THAN AN ADJUSTABLE LIMIT VALUE

(30) Priorité: 05.06.2014 FR 1455136
(43) Date de publication de la demande: 17.05.2017
(73) Titulaire: Bensoussan, Erik, 26800 Etoile sur Rhone (FR); Delatour, Laurence, 26800 Beauvallon (FR)
(72) Inventeur: Bensoussan, Erik, 26800 Etoile sur Rhone (FR); Delatour, Laurence, 26800 Beauvallon (FR)
(74) Mandataire: Cabinet Laurent & Charras
(86) Numéro de dépôt international: PCT/FR2015/051493
(87) Numéro de publication internationale: WO 2015/185873

(56) Documents cités:
- EP-A1- 0 317 455
- EP-A1- 1 674 739

## Description

La présente invention concerne un dispositif de connexion de sécurité qui s'ouvre automatiquement lorsqu'il subit un effort de traction supérieur à une valeur limite.

Un fusible mécanique tarable et réarmable est connu du document EP 1 674 739 A.

Avantageusement, l'effort de traction limite déclenchant l'ouverture du dispositif est réglable. En outre, le dispositif selon l'invention est réutilisable et peut être remis en place.

Ce dispositif peut être utilisé par exemple dans le cadre de la pratique de l'équitation ou lorsque l'on s'occupe de chevaux ou d'autres animaux devant être attachés à un point fixe.

En effet, lorsque l'on attache un cheval à un point fixe, notamment par l'intermédiaire d'une longe ou d'une corde attachée à un anneau fixé dans un mur, il arrive que celui-ci « tire au renard ». Une telle situation se produit généralement lorsque le cheval est effrayé pour une raison quelconque et se met à paniquer. Il se jette alors brutalement en arrière et tire de toutes ses forces sur l'attache afin de se détacher.

Dans sa panique, le cheval peut alors se blesser gravement et aller jusqu'à se rompre les cervicales si on ne le libère pas au plus vite. Or en tirant vers l'arrière, le cheval resserre les noeuds qui le retiennent à l'anneau, rendant impossible toute tentative de détachement. La seule solution est alors de couper la corde le plus rapidement possible.

Cependant, si une telle situation se produit en l'absence de témoin ou devant des personnes qui ne sont pas équipées de couteaux ou qui n'arrivent pas à sectionner assez vite la corde qui est généralement très solide et difficile à couper, les conséquences peuvent être dramatiques.

Pour résoudre ce problème, différente solution ont été proposées dans l'art antérieur.

On connait par exemple des dispositifs élastiques, appelés longes élastiques, que l'on interpose entre le licol du cheval et l'anneau fixé au mur, et dont la longueur augmente lorsque le cheval tire en arrière.

Cependant, l'utilisation de telles longes élastiques peut être très dangereuse pour l'animal. En effet, il arrive dans certains cas que le cheval, après avoir brutalement tiré vers l'arrière, se retrouve propulsé vers l'avant par réaction élastique et vienne violemment heurter le mur avec sa tête. Un tel choc peut causer des dommages irréversibles à l'animal, allant même parfois jusqu'à le tuer.

On a également proposé dans l'art antérieur, des dispositifs de liaison qui se rompent automatiquement lorsque la traction exercée par le cheval est supérieure à une valeur limite de rupture. Il peut s'agir par exemple d'une simple cordelette plus fragile, interposée entre la longe du cheval et l'anneau fixé dans le mur, mais également de dispositifs anti-panique plus sophistiqués.

Si de tels dispositifs permettent de résoudre le problème technique en libérant automatiquement le cheval afin d'éviter qu'il ne se blesse, ils présentent néanmoins un certain nombre d'inconvénients.

Ces dispositifs fonctionnent généralement par la rupture d'un élément de plus faible résistance. Ils sont donc détruits à l'usage et ne peuvent pas être remis en place et réutilisés par la suite.

En outre, la force nécessaire à l'ouverture de sécurité du dispositif n'est qu'approximativement connue et ne peut être modifiée. Elle ne peut pas être réglée afin de l'adapter à la situation, notamment, à la force, l'âge ou le poids du cheval.

Enfin, ces dispositifs sont pour la plupart métalliques et peuvent blesser l'animal, car après la rupture du dispositif, le morceau relié à la longe de l'animal peut le heurter violemment en raison des mouvements paniqués, brusques et désordonnés de l'animal.

Pour toutes ces raisons, il serait souhaitable de disposer d'un connecteur de sécurité, efficace, réutilisable, réglable et sans danger pour l'animal.

C'est l'objectif que l'invention se propose d'atteindre.

Pour résoudre ce problème technique, l'invention telle que définie par les caractéristiques de la revendication 1 enseigne un dispositif de connexion de sécurité à déconnexion automatique sous l'effet d'un effort de traction axiale exercé sur celui-ci, supérieur à une valeur limite déterminée.

Selon l'invention, le dispositif de connexion de sécurité est remarquable en ce qu'il comprend un ensemble mâle engagé librement en coulissement à l'intérieur d'un ensemble femelle. Les ensembles mâle et femelle comprennent des agencements complémentaires aptes à venir, dans une position de connexion, buter l'un contre l'autre pour stopper le coulissement de l'ensemble mâle selon une direction de désengagement, lesdits agencements étant aptes à se libérer l'un de l'autre, en position de déconnexion, sous l'effet de l'effort de traction axiale supérieur à la valeur limite déterminée, exercé relativement sur l'ensemble mâle selon la direction de désengagement pour séparer l'un de l'autre lesdites ensembles mâle et femelle.

Si le dispositif selon l'invention est particulièrement adapté à une utilisation dans le domaine de l'équitation et de l'élevage des chevaux, son utilisation n'est absolument pas limitée à une telle application.

Le dispositif selon l'invention peut être utilisé pour toutes les applications nécessitant un limiteur de traction axiale et pour lesquelles une déconnexion de sécurité est souhaitée lorsqu'une valeur limite de traction est atteinte.

Avantageusement, les ensembles mâle et femelle comprennent chacun des moyens pour l'accrochage d'un élément, l'un au moins des éléments étant susceptible d'exercer l'effort de traction axial dans la direction opposée à l'autre élément.

De cette manière, le dispositif selon l'invention peut indifféremment être relié d'une part à un point fixe et d'autre part à un élément mobile (objet, animal ou personne) susceptible d'exercer un effort de traction ; ou à deux éléments mobiles chacun exerçant, ou étant susceptibles d'exercer, un effort de traction dans une direction globalement opposée.

On citera à titre d'exemples non limitatifs quelques utilisations possibles du dispositif selon l'invention :
- lorsqu'une charge doit être soulevée ou tirée par un homme, un animal ou au moyen d'un appareil de manutention (grue, treuil, chariot...), et qu'il convient d'empêcher pour des raisons de sécurité ou autres qu'un poids trop important ne soit soulevé ou tiré, afin par exemple d'éviter des blessures pour l'homme ou l'animal ou d'éviter d'endommager l'appareil de manutention ;
- lorsqu'un animal est attaché à un point fixe et est susceptible de se blesser en tirant violemment sur son attache ;
- lorsqu'une personne, un animal ou un dispositif est relié à une charge ou une pièce en mouvement, et que l'on souhaite pouvoir la/le désolidariser de cette charge ou pièce en mouvement si la contrainte subie dépasse le seuil de sécurité ;
- lorsque deux machines ou animaux tirent en sens contraire sur un même dispositif que l'on souhaite préserver.

D'une façon plus générale, le dispositif selon l'invention pourra avantageusement être utilisé dans toute situation où il est souhaitable d'obtenir la déconnexion automatique de deux ensembles préalablement reliés, lorsque l'effort de traction s'exerçant sur eux atteint un seuil limite.

Il permettra ainsi d'assurer la sécurité humaine ou animale et/ou de préserver l'intégrité de biens matériels, lorsque ceux-ci peuvent être soumis à un effort de traction trop important.

De préférence, le dispositif de connexion de sécurité comprend des moyens de réglage de l'engagement de l'un des agencements complémentaires sur l'autre lors de la butée, de manière à faire varier la valeur limite déterminée de l'effort de traction axiale nécessaire à la séparation des ensembles mâle et femelle.

Selon une forme de réalisation particulière de l'invention, l'un des agencements complémentaires est réalisé par un épaulement s'étendant perpendiculairement par rapport à la direction de désengagement, et apte à buter contre l'autre agencement complémentaire dans la position de connexion.

Selon une forme de réalisation particulière, l'un des agencements complémentaires est escamotable par rapport à l'autre sous l'effet de l'effort de traction axiale supérieur à la valeur limite déterminée.

Par ailleurs, l'épaulement destiné à venir buter contre un agencement complémentaire, présente avantageusement une surface inclinée facilitant la libération de la butée sous l'effet de l'effort de traction axiale supérieur à la valeur limite déterminée.

Selon une forme de réalisation particulière de l'invention, l'un des agencements complémentaires est escamotable par rapport à l'autre sous l'effet de l'effort de traction axiale supérieur à la valeur limite déterminée.

En effet, l'un des agencements complémentaires peut par exemple se présenter sous la forme d'au moins une vis à bille escamotable, agencée dans un alésage taraudé transversal. La bille escamotable est apte à buter contre l'autre agencement complémentaire dans la position de connexion.

Avantageusement, le dispositif comprend une pluralité de vis à billes escamotables, agencées dans une pluralité d'alésages taraudés transversaux, et régulièrement répartis autour d'un axe longitudinal correspondant à ladite direction de désengagement.

Selon l'invention, l'ensemble femelle se présente, par exemple, sous la forme d'un manchon présentant un alésage central de réception de l'ensemble mâle, et définissant une ouverture d'engagement et une ouverture de désengagement dudit ensemble mâle. L'ensemble mâle se présente sous la forme d'une partie cylindrique adapté pour coulisser à l'intérieur de l'ensemble femelle.

D'autres caractéristiques et avantages de l'invention apparaîtront à la lecture de la description détaillée qui va suivre, description faite en référence aux dessins annexés, dans lesquels :
la figure 1 est une vue en perspective d'un exemple de dispositif de connexion selon l'invention ;
la figure 2 est une vue de dessus du dispositif de connexion de la figure 1 ;
la figure 3 est une vue en coupe longitudinale, selon le plan de coupe III-III de la figure 2, du dispositif de connexion de la figure 1 ;
les figures 4 à 12 sont des vues schématiques en perspective expliquant le fonctionnement du dispositif de connexion, avec :
   une première séquence, représentée sur les figures 4 et 5, qui illustre la déconnexion de sécurité du dispositif de connexion, et
   une deuxième séquence, représentée sur les figures 6 à 12, qui illustre les étapes successives de la remise en place du dispositif de connexion en vue de sa réutilisation ;

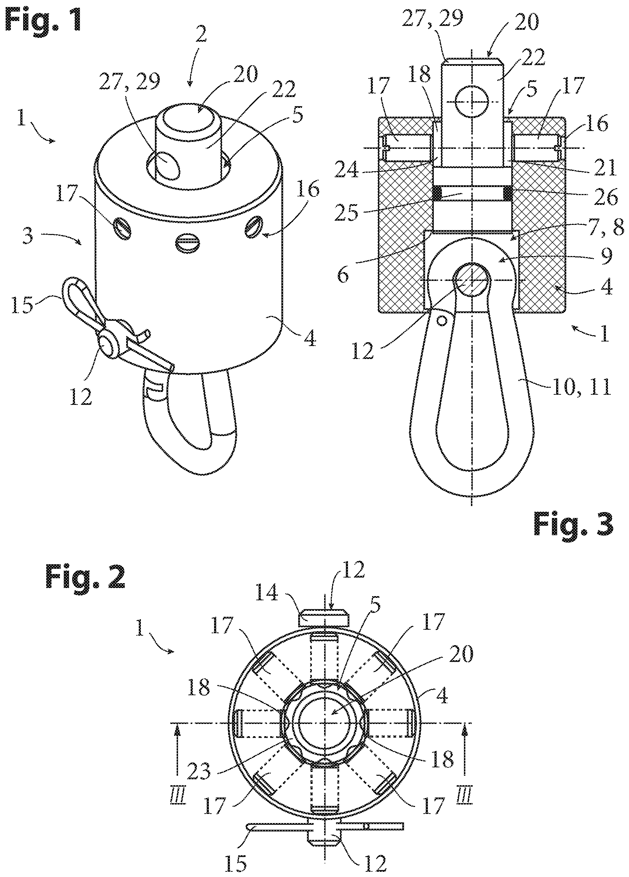

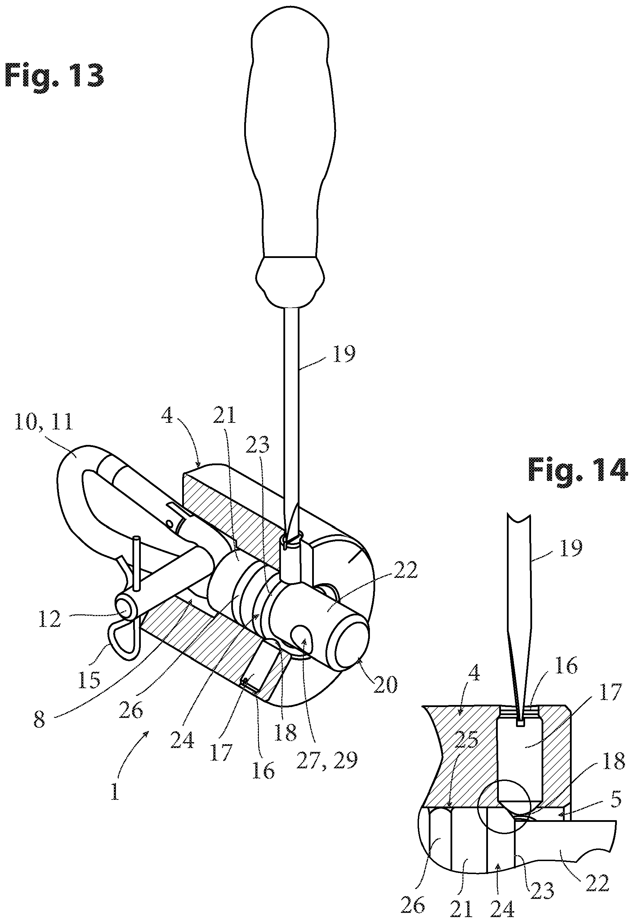

   la figure 13 est une vue en perspective écorchée du dispositif de connexion de la figure 1 illustrant le réglage de la valeur limite de l'effort de traction autorisé ;
   la figure 14 est un agrandissement d'un détail de la figure 13.

Le dispositif de connexion de sécurité selon la présente invention va maintenant être décrit de façon détaillée en référence aux figures 1 à 14. Les éléments équivalents représentés sur les différentes figures porteront les mêmes références numériques.

On définira dans la suite de cette description les notions de haut et de bas, d'inférieur et de supérieur, etc..., en fonction de l'orientation adoptée par le dispositif de connexion représenté sur la figure 1. Il est évident que cette orientation ne sera pas forcément conservée en utilisation.

Sur les différentes figures, on a représenté un exemple préférentiel d'un dispositif de connexion (1) selon l'invention.

Ce dispositif de connexion (1) comprend deux ensembles principaux : un ensemble mâle (2) et un ensemble femelle (3), engagés l'un dans l'autre en position de connexion et susceptibles de se séparer l'un de l'autre en position de déconnexion. Plus précisément l'ensemble mâle (2) est engagé librement en coulissement à l'intérieur de l'ensemble femelle (3).

L'ensemble femelle (3) comprend un manchon (4), préférentiellement cylindrique, qui présente un alésage central (5), débouchant en partie supérieure du manchon (4) et s'étendant dans la direction axiale de celui-ci. Cet alésage central (5) est destiné à recevoir en son sein l'ensemble mâle (2) qui y est engagé co-axialement en position de connexion du dispositif (1). L'alésage central (5) présente donc un diamètre adapté aux dimensions de l'ensemble mâle (2).

De préférence, l'alésage central (5) se prolonge, après un épaulement (6), par un alésage coaxial (7) de plus grand diamètre débouchant en partie inférieure du manchon (4) et formant ainsi, vers le bas, une ouverture d'engagement (8) dudit ensemble mâle (2). A l'opposé de l'ouverture d'engagement (8), l'alésage (5) débouche vers une ouverture de désengagement.

Cette ouverture d'engagement (8) est destinée à loger l'extrémité supérieure (9) d'un organe d'accrochage (10), tel que par exemple un mousqueton (11) dans le mode de réalisation représenté, ou un anneau, un crochet ou tout autre dispositif analogue permettant d'accrocher l'ensemble femelle (3) du dispositif de connexion (1) et ainsi de le relier à un point fixe ou à un élément susceptible d'exercer ou de subir un effort de traction.

L'extrémité supérieure (9) de l'organe d'accrochage (10) est maintenue de manière amovible dans l'ouverture d'engagement au moyen d'un moyen de maintien temporaire, de préférence une goupille (12) qui le traverse, ou par tout autre moyen de fixation temporaire imaginable par l'homme du métier.

Le manchon (4) comprend pour cela un alésage transversal (13), situé au niveau de l'ouverture d'engagement (8), qui s'étend radialement et débouche de part et d'autre du manchon après avoir traversé cette ouverture d'engagement (8).

Cet alésage transversal (13) permet l'engagement de la goupille (12) à travers le manchon (4), via l'ouverture d'engagement (8) et ainsi à travers l'extrémité supérieure (9) de l'organe d'accrochage (10) ce qui en assure le maintien.

La goupille (12) est amovible et est retenue de façon temporaire dans l'alésage transversal (13). Ce maintien en position de la goupille (12) peut se faire par exemple au moyen d'un rebord périphérique (14), de diamètre supérieur à celui de l'alésage transversal (13), servant de butée à l'une des extrémités de la goupille (12), et au moyen d'une épingle (15) qui est engagée de manière amovible à l'autre extrémité de la goupille (12).

Le manchon (4) comprend, en outre, au moins un, et de préférence plusieurs alésages taraudés (16), disposés radialement dans un plan transversal au manchon (4) et traversant de l'extérieur du manchon (4) jusque dans l'alésage central (5) de celui-ci. Ces alésages taraudés (16), sensiblement horizontaux, sont de préférence régulièrement répartis sur la périphérie du manchon (4). Le mode de réalisation préférentiel représenté sur les figures en comporte huit.

Dans chacun de ces alésages taraudés (16) est engagée par vissage une vis (17) à extrémité escamotable, par exemple à téton mais préférentiellement à bille (18). L'autre extrémité de ces vis est adaptée pour être manoeuvrée de l'extérieur par un outil de vissage courant. Elle peut ainsi par exemple être fendue ou à empreinte cruciforme pour pouvoir coopérer avec un tournevis respectivement plat (19) (figures 13 et 14) ou cruciforme, ou encore à six pans creux actionnable par une clé Allen.

L'ensemble mâle (2) du dispositif de connexion (1) selon l'invention est formé d'un axe (20) en deux parties successives : une première partie ou partie inférieure (21), sensiblement cylindrique et de diamètre correspondant sensiblement à celui de l'alésage central (5) du manchon (4), tout en restant légèrement inférieur à celui-ci afin de pouvoir y être engagée, prolongée axialement par une deuxième partie ou partie supérieure (22) de diamètre inférieur.

Le raccordement entre la partie inférieure (21) de l'axe (20) et la partie supérieure (22) de plus faible diamètre se fait progressivement, au niveau d'une zone chanfreinée formant un épaulement (23) à surface inclinée et pouvant servir de rampe. Cet épaulement (23) peut par exemple être réalisé comme représenté au moyen d'une rondelle (24).

Afin de compenser les tolérances de fabrication et d'assurer un maintien adapté de la partie inférieure (21) de l'ensemble mâle (2) dans l'alésage central (5) du manchon (4) en position de connexion du dispositif, la partie inférieure (21) de l'ensemble mâle (2) peut comprendre en outre une gorge circulaire (25) dans laquelle est préférentiellement engagé un joint torique (26).

L'ensemble mâle (2) comprend enfin, au niveau de la partie supérieure (22) de l'axe (20), une zone de réception (27) pour un deuxième organe d'accrochage (28) permettant d'accrocher l'ensemble mâle (2) du dispositif de connexion (1) selon l'invention et ainsi de le relier à un point fixe ou à un autre élément susceptible d'exercer ou de subir un effort de traction.

Bien que de nombreuses autres variantes puissent être imaginées par l'homme du métier, la zone de réception (27) consiste sur le mode de réalisation représenté en un simple alésage transversal traversant (29) dans lequel il est possible d'engager par exemple un anneau (30), un crochet, un mousqueton, ou directement une corde, sangle, lanière, laisse, chaîne, longe, ou l'extrémité d'un harnais, ou tout autre organe d'accrochage approprié.

Cette zone de réception (27) est réalisée au niveau de l'extrémité libre de la deuxième partie (22) de l'axe (20) qui reste toujours accessible quelle que soit la position du dispositif de connexion (1) selon l'invention, et cela même lorsque l'ensemble mâle (2) est engagé dans l'ensemble femelle (3) du dispositif en position de connexion.

Selon une autre variante envisageable, la zone de réception (27) peut directement être conformée en organe d'accrochage (28) et se présenter par exemple sous la forme d'une boucle dépassant de l'extrémité supérieure de l'axe (20).

En position de connexion du dispositif (1) selon l'invention, représentée sur les figures 1 à 4, l'ensemble mâle (2) du dispositif est engagé dans l'ensemble femelle (3). Pour cela, l'axe (20) de l'ensemble mâle (2) est engagé dans l'alésage central (5) du manchon (4), de manière à ce que la partie supérieure (22) de plus faible diamètre de l'axe (20) se retrouve en regard des alésages taraudés (16) du manchon (4) et que l'extrémité libre de cette partie supérieure (22) dépasse hors du manchon (4) au-dessus de celui-ci.

Les vis à billes (17) sont engagées dans les alésages taraudés (16) du manchon (4) et sont suffisamment enfoncées pour que leur extrémité escamotable, préférentiellement leur bille (18), fasse saillie dans l'alésage central (5) du manchon (4) et qu'elles rétrécissent le diamètre de celui-ci à ce niveau, jusqu'à le rendre inférieur à celui de la partie inférieure (21) de l'axe (20), en restant toutefois supérieur ou égal à celui de la partie supérieure (22) de l'axe (20).

Les vis à billes (17) maintiennent ainsi le dispositif selon l'invention en position de connexion lorsqu'aucun effort n'est exercé sur celui-ci ou lorsqu'il subit un effort de traction visant à séparer les deux ensembles (2, 3) du dispositif de connexion (1) qui reste modéré, c'est-à-dire inférieur à une valeur de seuil. En effet, dans ce cas, les extrémités escamotables (18) des vis à billes (17) viennent en butée contre l'épaulement incliné (23) de l'axe (20) et s'opposent à l'échappement de l'axe (20) hors du manchon (4).

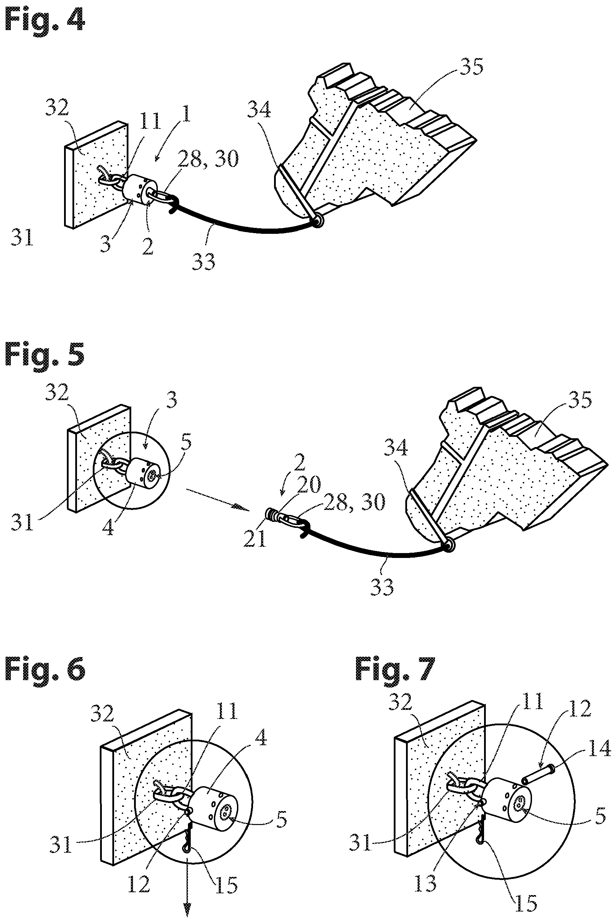

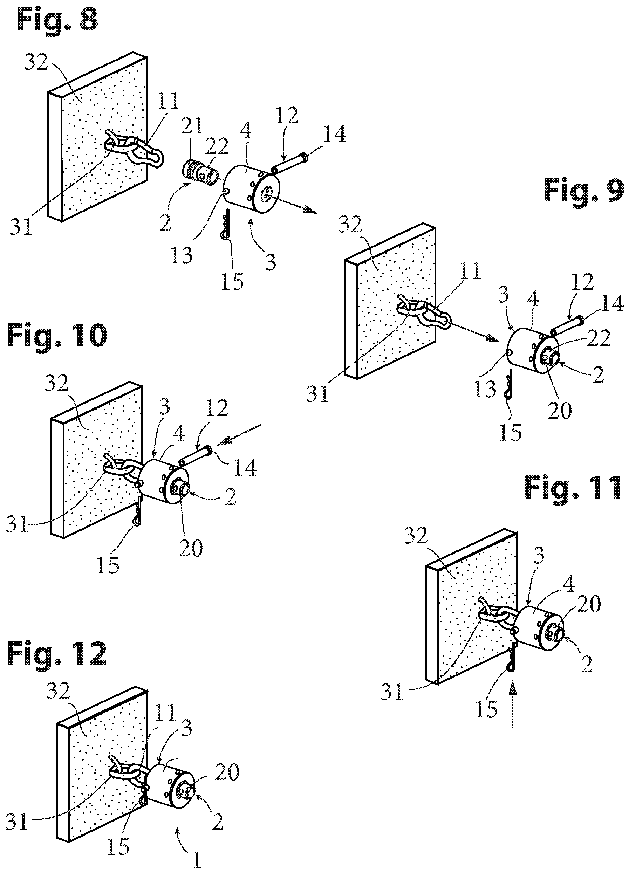

Le fonctionnement du dispositif de connexion (1) selon l'invention découle de manière évidente des moyens décrits précédemment. Pour une meilleure compréhension du lecteur, il a été représenté schématiquement dans un exemple d'utilisation sur les figures 4 et 12 et sera brièvement décrit ci-dessous.

Le dispositif de connexion (1) selon l'invention a été représenté sur la figure 4 en position de connexion. Il est relié d'un côté par le mousqueton (11) de son ensemble femelle (3) à un anneau (31) fixé à un mur (32) formant ainsi un point fixe. De l'autre côté, il est relié au moyen d'un anneau (30) engagé dans l'alésage traversant (29) de son ensemble mâle (2) à une corde (33) reliée au harnais (34) d'un cheval (35) susceptible d'exercer un effort de traction vers l'arrière pour se détacher.

Comme expliqué précédemment, tant que le cheval (35) ne tire pas sur la corde (33) ou n'exerce pas un effort de traction trop important, les vis à billes (17) maintiennent le dispositif (1) en position de connexion (figure 4).

Lorsque le cheval (35) se met à tirer très fort sur la corde (33), par exemple s'il se met à « tirer au renard », il tire sur l'ensemble mâle (2) qui se déplace dans l'alésage central (5) en direction de l'ouverture de désengagement du manchon (4). Les billes (18) des vis à billes (17) se retrouvent en appui contre l'épaulement incliné (23).

Si l'effort de traction est supérieur à une valeur de seuil, qui correspond à la force nécessaire pour contrer la force élastique des ressorts contenus dans les vis à billes (17) et ainsi faire rentrer les billes escamotables (18) dans les corps de ces vis à billes (17), les billes (18) s'escamotent progressivement et libèrent le passage dans l'alésage central (5). La partie inférieure (21) de plus gros diamètre de l'axe (20) peut alors coulisser dans l'alésage central (5) jusqu'à sortir en dehors du manchon (4) par l'ouverture de désengagement. Le dispositif (1) selon l'invention se retrouve alors en position déconnectée, son ensemble mâle (2) et son ensemble femelle (3) étant séparés l'un de l'autre comme illustré sur la figure 5. Le cheval (35) est ainsi libéré et ne risque pas de se blesser.

L'escamotage des billes (18) des vis à billes (17) se trouve facilité par la nature inclinée de l'épaulement (23) qui constitue une rampe progressive d'appui sur celles-ci. La résistance à la déconnexion opposée par le dispositif (1) selon l'invention peut ainsi être plus ou moins prononcée selon l'angle d'inclinaison choisie pour cet épaulement (23).

Avantageusement, le dispositif de connexion (1) selon l'invention est réutilisable et peut être très simplement remis en position de connexion.

Pour cela, il suffit de retirer l'épingle (15) amovible (figure 6), puis la goupille (12) (figure 7) de l'ensemble femelle (3).

Le mousqueton (11) peut alors être retiré hors de l'ouverture d'engagement (8) du manchon (4) (figure 8). L'ensemble mâle (2) peut ensuite être replacé dans l'ensemble femelle (3) en passant par cette ouverture d'engagement (8) qui présente un diamètre supérieur à celui de l'alésage central (5).

Une fois, l'ensemble mâle (2) correctement positionné dans l'ensemble femelle (3), à savoir lorsque l'épaulement incliné (23) de l'axe (20) se trouve en butée contre les billes (18) des vis à billes (17) qui sont automatiquement revenues en position saillante sous l'action des ressorts, il suffit de remettre l'extrémité supérieure (9) du mousqueton (11) dans l'ouverture d'engagement (8) du manchon (4) (figure 9), puis de bloquer ce mousqueton (11) au moyen de la goupille (12) (figure 10) et de l'épingle (15) (figure 11).

Le dispositif de connexion (1) selon l'invention est alors de nouveau en position de connexion, prêt à resservir (figure 12).

Selon un aspect particulièrement avantageux de l'invention, le dispositif de connexion (1) est réglable comme illustré sur les figures 13 et 14.

En effet, en enfonçant plus ou moins les vis à billes (17) dans les alésages taraudés (16) du manchon (4), on peut régler la pression exercée par les billes (18) (ou tiges) des vis à billes (17) sur l'épaulement incliné (23) de l'axe (20) et ainsi la valeur de seuil de l'effort de traction nécessaire à la déconnexion du dispositif (1).

Si l'on souhaite par exemple, que le dispositif (1) se déconnecte moins facilement, c'est-à-dire que la valeur de seuil de l'effort de traction soit augmentée, il suffit d'enfoncer plus profondément les vis à billes (17) dans les alésages taraudés (16) et inversement dans le cas contraire.

Ce réglage peut être effectué très facilement, au moyen d'un simple tournevis (ou clé Allen).

Le dispositif de connexion (1) selon l'invention est remarquable par sa simplicité de réalisation. Il est composé exclusivement de pièces mécaniques, dont le fonctionnement est parfaitement fiable et n'est pas tributaire d'un organe de manoeuvre extérieur. De nombreuses applications peuvent être envisagées, parmi lesquelles l'on peut citer à titre indicatif nullement limitatif, sécurité humaine, animale, préservation des biens matériels...

Dans le cas où l'on envisage d'utiliser ce dispositif de connexion pour un homme ou un animal, on utilise préférentiellement un matériau léger tel que par exemple une matière plastique résistante, notamment du polyoxyméthylène, pour réaliser le dispositif, ceci afin de garantir la sécurité de la personne ou de l'animal concerné en cas de choc avec une partie du dispositif lors de sa déconnexion. L'utilisation d'une telle matière plastique permet également une utilisation en extérieur du dispositif de connexion (1) selon l'invention.

De manière évidente, l'invention ne se limite pas aux modes de réalisation préférentiels décrits précédemment et représentés sur les différentes figures, l'homme du métier pouvant y apporter de nombreuses modifications et imaginer d'autres variantes sans sortir ni de la portée, ni du cadre de l'invention définis par les revendications.

## Revendications

1. Dispositif de connexion (1) de sécurité à déconnexion automatique sous l'effet d'un effort de traction axiale exercé sur celui-ci, supérieur à une valeur limite déterminée, le dispositif comprend un ensemble mâle (2), sous la forme d'une partie cylindrique (21), engagé librement en coulissement à l'intérieur d'un ensemble femelle (3), sous la forme d'un manchon (4) présentant un alésage central (5) de réception de l'ensemble mâle (2), et définissant une ouverture d'engagement (8) dudit ensemble mâle (2), lesdits ensembles mâle (2) et femelle (3) comprennent des agencements complémentaires (23, 17) aptes à venir, dans une position de connexion, buter l'un contre l'autre pour stopper le coulissement de l'ensemble mâle (2) selon une direction de désengagement, lesdits agencements (23, 17) étant aptes à se libérer l'un de l'autre, en position de déconnexion, sous l'effet de l'effort de traction axiale supérieur à la valeur limite déterminée, exercé relativement sur l'ensemble mâle (2) selon la direction de désengagement pour séparer l'un de l'autre lesdits ensembles mâle (2) et femelle *(3),* ***caractérisé* en ce qu'**à l'opposé de l'ouverture d'engagement (8), l'alésage (5) débouche vers une ouverture de désengagement.

2. Dispositif de connexion (1) de sécurité selon la revendication 1, ***caractérisé* en ce que** les ensembles mâle (2) et femelle (3) comprennent chacun des moyens (10, 27) pour l'accrochage d'un élément (32, 33), l'un au moins des éléments (32, 33) étant susceptible d'exercer l'effort de traction axial dans la direction opposée à l'autre élément (33, 32).

3. Dispositif de connexion (1) de sécurité selon l'une des revendications précédentes, ***caractérisé* en ce qu'**il comprend des moyens (16) de réglage de l'engagement de l'un des agencements complémentaires (23, 17) sur l'autre lors de la butée, de manière à faire varier la valeur limite déterminée de l'effort de traction axiale nécessaire à la séparation des ensembles mâle (2) et femelle (3).

4. Dispositif de connexion (1) de sécurité selon l'une des revendications précédentes, ***caractérisé* en ce que** l'un des agencements complémentaires (23) est réalisé par un épaulement s'étendant perpendiculairement par rapport à la direction de désengagement, et apte à buter contre l'autre agencement complémentaire (17) dans la position de connexion.

5. Dispositif de connexion (1) de sécurité selon la revendication *4,* ***caractérisé* en ce que** l'épaulement (23), destiné à venir buter contre un agencement complémentaire (17), présente une surface inclinée facilitant la libération de la butée sous l'effet de l'effort de traction axiale supérieur à la valeur limite déterminée.

6. Dispositif de connexion (1) de sécurité selon l'une des revendications précédentes, ***caractérisé* en ce que** l'un des agencements complémentaires (17) est escamotable par rapport à l'autre sous l'effet de l'effort de traction axiale supérieur à la valeur limite déterminée.

7. Dispositif de connexion (1) de sécurité selon la revendication *6,* ***caractérisé* en ce que** l'un des agencements complémentaires (17) se présente sous la forme d'au moins une vis (17) à bille escamotable (18), agencée dans un alésage taraudé transversal (16) par rapport à la direction de désengagement, ladite bille escamotable (18) étant apte à buter contre l'autre agencement complémentaire (23) dans la position de connexion.

8. Dispositif de connexion (1) de sécurité selon la revendication *7,* ***caractérisé* en ce qu'**il comprend une pluralité de vis (17) à billes escamotables (18), agencées dans une pluralité d'alésages taraudés transversaux (16) par rapport à la direction de désengagement, et régulièrement répartis autour d'un axe longitudinal correspondant à ladite direction de désengagement.

## Patentansprüche

1. Sicherheitsanschlussvorrichtung (1) mit automatischer Trennung unter der Wirkung einer axialen Zugkraft, die darauf ausgeübt wird und höher als ein festgelegter Grenzwert ist, wobei die Vorrichtung ein Steckerbauteil (2) in Form eines zylindrischen Teils (21) umfasst, der frei gleitend in ein Aufnahmebauteil (3) in Form einer Hülse (4) mit einer zentralen Bohrung (5) zur Aufnahme dieses Steckerbauteils (2), die eine Aufnahmeöffnung (8) dieses Steckerbauteils (2) definiert, eingerückt ist, wobei diese Stecker- (2) und Aufnahmebauteile (3) komplementäre Anordnungen (23, 17) umfassen, die in der Lage sind, in einer Verbindungsposition gegeneinander zu stoßen, um das Gleiten des Steckerbauteils (2) in einer Ausrückrichtung zu stoppen, wobei diese Anordnungen (23, 17) in der Lage sind, sich in einer Trennposition voneinander zu lösen, unter der Wirkung einer axialen Zugkraft, die höher ist als der festgelegte Grenzwert und relativ auf das Steckerbauteil (2) ausgeübt wird, entsprechend der Ausrückrichtung, um diese Stecker- (2) und Aufnahmebauteile (3) voneinander zu trennen, **dadurch gekennzeichnet, dass** gegenüber der Aufnahmeöffnung (8) die Bohrung (5) in eine Ausrücköffnung mündet.

2. Sicherheitsanschlussvorrichtung (1) gemäß Anspruch 1, **dadurch gekennzeichnet, dass** die Stecker- (2) und Aufnahmebauteile (3) jeweils Mittel (10, 27) zum Anhängen eines Elementes (32, 33) umfassen, wobei jedes dieser Elemente (32, 33) eine axiale Zugkraft in der zu der des anderen Elementes (32, 33) entgegengesetzten Richtung ausüben kann.

3. Sicherheitsanschlussvorrichtung (1) gemäß einem der vorhergehenden Ansprüche, **dadurch gekennzeichnet, dass** sie Mittel (16) zur Einstellung des Einrückens einer der zusätzlichen Anordnungen (23, 17) in die andere beim Anschluss enthält, so dass der vorher festgelegte Grenzwert der notwendigen axialen Zugkraft zur Trennung der Stecker- (2) und Aufnahmebauteile (3) variiert werden kann.

4. Sicherheitsanschlussvorrichtung (1) gemäß einem der vorhergehenden Ansprüche, **dadurch gekennzeichnet, dass** eine der komplementären Anordnungen (23) durch eine Schulter ausgeführt ist, die senkrecht zur Ausrückrichtung verläuft, und in der Lage ist, in der Verbindungsposition gegen die andere komplementäre Anordnung (17) zu stoßen.

5. Sicherheitsanschlussvorrichtung (1) gemäß Anspruch 4, **dadurch gekennzeichnet, dass** die Schulter (23), die gegen die komplementäre Anordnung (17) stoßen kann, eine geneigte Fläche hat, die das Freigeben des Anschlags unter der Wirkung der axialen Zugkraft, die höher als der festgelegte Grenzwert ist, erleichtert.

6. Sicherheitsanschlussvorrichtung (1) gemäß einem der vorhergehenden Ansprüche, **dadurch gekennzeichnet, dass** eine der komplementären Anordnungen (17) gegenüber der anderen unter der Wirkung der axialen Zugkraft, die höher als der festgelegte Grenzwert ist, herausgezogen werden kann,

7. Sicherheitsanschlussvorrichtung (1) gemäß Anspruch 6, **dadurch gekennzeichnet, dass** eine der komplementären Anordnungen (17) die Form mindestens einer Schraube (17) mit einschiebbarer Kugel (18) hat, die in einer Gewindebohrung (16) quer zur Ausrückrichtung angeordnet ist, wobei diese einschiebbare Kugel (18) in der Lage ist, in der Verbindungsposition gegen die andere komplementäre Anordnung (23) zu stoßen.

8. Sicherheitsanschlussvorrichtung (1) gemäß Anspruch 7, **dadurch gekennzeichnet, dass** sie mehrere Schrauben (17) mit einschiebbarer Kugel (18) umfasst, die in mehreren Gewindebohrungen (16) quer zur Ausrückrichtung, die regelmäßig um eine Längsachse verteilt sind, die dieser Ausrückrichtung entspricht, angeordnet sind.

## Claims

1. A safety connection device (1) with automatic release under the effect of an axial tensile force exerted on it, which is greater than a predetermined threshold value, the device comprises a male assembly (2), in the form of a cylindrical part (21), engaged such that it is free to slide inside a female assembly (3), in the form of a sleeve (4) with a central bore (5) for receiving the male assembly (2), that defines an opening of engagement (8) of said male assembly (2), said male (2) and female (3) assemblies include supplementary arrangements (23, 17), which, in connected position, are able to abut against each other to stop the sliding of the male (2) assembly in the direction of disengagement, said arrangements (23, 17), in disconnected position, being able to release themselves from each other under the effect of the axial tensile force greater than the predetermined threshold value, relatively applied on the male (2) assembly in the direction of disengagement in order to separate one from the other said male (2) and female (3) assemblies, ***characterised* in that**, opposite the opening of engagement, the bore opens towards a disengagement opening.

2. Safety connection device (1) according to claim 1, ***characterised* in that** each one of the male (2) and female (3) assemblies include means (10, 27) for hooking an element (32, 33), at least one of the elements (32, 33) is capable of exerting the axial tensile force in the direction opposite to the other element (33, 32).

3. Safety connection device (1) according to one of the preceding claims, ***characterised* in that** it comprises means (16) for adjusting the engagement of one of the supplementary arrangements (23, 17) on the other during the abutment, so as to adjust the predetermined threshold value of the axial tensile force required for separating the male (2) and female (3) assemblies.

4. Safety connection device (1) according to one of the preceding claims, ***characterised* in that** one of the supplementary arrangements (23) is formed by a shoulder extending perpendicularly to the direction of disengagement, and capable of abutting against the other supplementary arrangement (17) in the position of connection.

5. Safety connection device (1) according to claim 4, ***characterised* in that** the shoulder (23) intended to abut against a supplementary arrangement (17), has an inclined surface to facilitate release of the abutment under the effect of the axial tensile force greater than the predetermined threshold value.

6. Safety connection device (1) according to one of the preceding claims, ***characterised* in that** one of the supplementary arrangements (17) is retractable in relation to the other under the effect of the axial tensile force greater than the predetermined threshold value.

7. Safety connection device (1) according to claim 6, ***characterised* in that** one of the supplementary arrangements (17) is in the form of at least one screw (17) with a retractable ball (18), arranged in a transverse threaded bore (16) in relation to the direction of disengagement, where the said retractable ball (18) is capable of abutting against the other supplementary arrangement (23) in the position of connection.

8. Safety connection device (1) according to claim 7, ***characterised* in that** it comprises a plurality of screws (17), with retractable balls (18) arranged in multiple transverse threaded bores (16) in relation to the direction of disengagement, and uniformly distributed around a longitudinal axis corresponding to said direction of disengagement.
